# FASCICULE DE BREVET EUROPEEN

(11) **EP 1 896 769 B1**
(45) Date de publication et mention de la délivrance du brevet: **02.12.2009**
(21) Numéro de dépôt: 06779000.6
(22) Date de dépôt: 30.06.2006
(51) Int. Cl.: F21V 8/00, G02B 6/42

(54) **PANNEAU DE COMMUNICATION RETROECLAIRE**
RÜCKBELEUCHTETE KOMMUNIKATIONSANZEIGE
BACKLIT COMMUNICATION DISPLAY

(30) Priorité: 30.06.2005 FR 0551860
(43) Date de publication de la demande: 12.03.2008
(73) Titulaire: Prismaflex International, 69610 Haute Rivoire (FR)
(72) Inventeur: BIHR, Eric, F-69610 Meys (FR); BERGONNIER, Flavien, F-69610 Souzy (FR)
(74) Mandataire: Palix, Stéphane
(86) Numéro de dépôt international: PCT/FR2006/050656
(87) Numéro de publication internationale: WO 2007/003857

(56) Documents cités:
- EP-A2- 0 759 538
- US-A- 4 761 047
- US-A- 4 885 663
- US-A- 5 021 928
- US-A- 5 183 323
- US-B1- 6 636 686

## Description

### Domaine technique

L'invention se rapporte au domaine des panneaux de communication tels que des panneaux publicitaires ou des enseignes lumineuses. De tels panneaux peuvent ainsi comporter une source lumineuse apte à rétroéclairer un message publicitaire agencé sur un support.

L'invention vise plus particulièrement un agencement particulier permettant de former une source lumineuse au moyen d'une nappe de fibres optiques aptes à émettre latéralement la lumière.

### Art antérieur

De façon générale, les panneaux de communication rétro éclairés comportent une pluralité de sources lumineuses, de type "tube fluorescent", agencées au niveau de la face arrière du support comportant le message publicitaire.

Cependant, lorsque de telles sources lumineuses sont utilisées, il est nécessaire de les éloigner du support, pour permettre une meilleure diffusion de la lumière et éviter l'apparition de zones présentant une intensité différente au niveau du support. En effet, lorsque le support est agencé à proximité des tubes fluorescents, la lumière transmise au travers du support n'est pas homogène, ce qui est inesthétique pour un support publicitaire.

Par conséquent, ce type de panneaux doit d'une part comporter un grand nombre de sources de type "tube fluorescent", de façon à générer une intensité lumineuse suffisante, et d'autre part présenter une épaisseur importante, de façon à diffuser la lumière de manière homogène sur le support.

On connaît également des panneaux de communication comportant une source lumineuse se présentant sous la forme de fibres optiques aptes à transmettre latéralement de la lumière. Un tel panneau a notamment été décrit dans le document US 5 021 928. Dans ce panneau, les fibres optiques sont rassemblées et introduites à différents endroits dans un raccord apte à transmettre la lumière émise par un générateur de lumière. Un tel générateur présente un encombrement important et doit par conséquent être positionné en dehors du panneau. Cet agencement permet de générer une lumière diffuse à proximité immédiate du support d'affichage et donc, de réduire l'encombrement en épaisseur, d'un tel panneau:

Cependant, dans ce cas, la source lumineuse étant unique, elle doit générer une intensité très importante de lumière pour permettre d'éclairer totalement le panneau. En outre, cette source lumineuse n'est pas adaptée pour éclairer des panneaux de très grande dimension, et notamment des enseignes lumineuses dont la superficie peut être très importante. Enfin, ce type de générateur de lumière à haute intensité est très onéreux et nécessite des frais d'entretien importants car l'élément éclairant doit être changé régulièrement.

Ainsi, le but de l'invention est de permettre le rétroéclairage de supports publicitaires dans un encombrement peu important et avec des coûts de fabrication et d'exploitation peu importants.

On connaît également et tel que décrit dans le document US 4 885 663 des panneaux à éclairage latéral comportant une pluralité de fibres optiques tissées entre elles et noyées à l'intérieur d'un enrobage translucide dont le matériau possède un indice de réfraction différent de celui du matériau utilisé pour les fibres optiques. Les fibres sont au niveau de leurs extrémités regroupées en faisceaux, chacun équipé d'un connecteur servant d'interface entre une source ponctuelle de lumière et les fibres.

Cependant, dans ce cas, la lumière est émise de manière non collimatée par les sources ponctuelles. En prenant uniquement en compte l'ouverture numérique des fibres optiques, seule une infime partie du faisceau lumineux issu de la source est alors transmise par les fibres. Par ailleurs, la lumière peut être réfléchie sur le connecteur et ne pas être transmise par les fibres. Dans tous les cas, il s'ensuit des pertes non négligeables.

De plus, la mise en place des fibres directement en regard de chaque source ne se fait pas automatiquement' et peut se révéler complexe à réaliser manuellement.

Par conséquent, un second objectif de l'invention est de transmettre le maximum de l'énergie lumineuse émise par les sources ponctuelles tout en facilitant la mise en regard des faisceaux de fibres optiques avec les sources ponctuelles.

### Exposé de l'invention

L'invention concerne donc un panneau de communication comportant une source lumineuse apte à rétro éclairer un message publicitaire ou analogue agencé sur un support.

En pratique, la source lumineuse comporte une nappe de fibres optiques agencées en regard de la face arrière du support et apte à émettre latéralement la lumière, les fibres optiques étant sur au moins une bordure de la nappe rassemblées en une pluralité de faisceaux.

A l'intérieur de la nappe, les fibres optiques peuvent être maintenues à une distance prédéterminée. Un tel résultat peut notamment être obtenu en solidarisant par collage les fibres indépendamment sur une feuille qui peut être réfléchissante. De cette manière, la lumière transmise par les fibres s'échappe latéralement au niveau d'un seul côté de la nappe. Ce résultat peut également être obtenu en utilisant des nappes tissées dans lesquelles les fibres optiques sont agencées en trame et/ou en chaîne.

La nappe peut donc être réalisée par un procédé de tissage des fibres optiques, tel que décrit dans le document WO 2005/026423. Ce mode de réalisation particulier confère de nombreux avantages en termes de souplesse de la source lumineuse ce qui permet de l'utiliser pour éclairer des surfaces gauches. De plus, la configuration sous forme d'un tissu est également avantageuse pour le transport de la nappe, puisque elle peut être roulée. Complémentairement, son poids est réduit et elle présente une faible épaisseur. Cependant, il est avantageux de séparer d'un écart minimum la nappe et le support de manière à lisser les défauts visuels d'hétérogénéité de la source lumineuse. Cet écart minimum est donc fonction de la nappe utilisée et notamment du nombre de fibres optiques. A titre d'exemple, de bons résultats ont été obtenus avec un écart compris entre 20 et 100mm.

En outre, un tissage utilisant des fibres optiques en trame permet de réaliser une source lumineuse de très grandes dimensions, dont la longueur est déterminée par la longueur de la chaîne.

Chaque faisceau de fibres est équipé à son extrémité d'une bague de regroupement pour maintenir chacune des fibres par rapport aux autres de ce même faisceau. Autrement dit, les fibres optiques sont regroupées en une pluralité de sous-ensembles au niveau de leur extrémité libre, au moyen de bagues dans lesquelles elles pénètrent.

Par ailleurs, la source lumineuse comporte également une pluralité de sources ponctuelles agencées en regard d'au moins une bordure de la nappe de fibres optiques. Des systèmes optiques convergents sont agencés en regard de chaque source ponctuelle de manière à collimater de façon homogène les rayons lumineux émis par celles-ci en direction des fibres optiques.

En d'autres termes, des systèmes optiques convergents sont insérés entre d'une part, les sources lumineuses ponctuelles, et d'autre part, au moins une bague de regroupement d'un faisceau de fibres optiques. De cette manière, on améliore la directivité du rayon lumineux émis par la source ponctuelle, vers les fibres optiques.

Selon l'invention, le panneau se caractérise en ce que les systèmes optiques convergents sont agencés en liaison rotule avec d'une part des supports de centrage et d'autre part des organes d'alignement des bagues de regroupement.

Autrement dit, l'alignement entre la source lumineuse et la bague est assuré par une liaison rotule à chaque extrémité de l'optique. De cette manière, on réalise un positionnement précis et automatique des systèmes optiques avec d'une part la source lumineuse en regard au moyen des supports de centrage et d'autre part avec le faisceau de fibres optiques en regard au moyen des organes d'alignement. La précision de cet alignement permet donc de garantir un rendement maximum en transmettant la totalité de la lumière émise par les sources aux fibres optiques en regard.

Avantageusement, les bagues de regroupement peuvent maintenir les fibres optiques par un sertissage de forme hexagonale. En d'autres termes, les bagues de regroupement peuvent être déformées de manière à immobiliser les fibres dans une position prédéterminée.

Dans ce cas particulier, l'intensité de la force de sertissage doit être suffisamment élevée afin de maintenir les fibres optiques sous forme de faisceaux et d'éliminer les espaces d'air entre les fibres par compactage. Cependant l'intensité de cette force ne doit pas être trop importante, car elle ne doit pas entraîner la destruction des fibres par compression.

Le sertissage hexagonal des bagues de regroupement est avantageux puisqu'il permet de réduire les pertes de couplage. En effet, cette déformation de la bague de regroupement permet de conférer à chacune des fibres une forme se rapprochant d'une forme hexagonale. De cette manière, on réduit au minimum les interstices d'air présents initialement entre chaque fibre. Par conséquent, la densité surfacique du faisceau en fibre et le rendement de la lumière transmise par la source aux fibres optiques sont maximales.

De plus, en cas de désalignement de la source lumineuse et du faisceau, la forme hexagonale du faisceau de fibres permet de minimiser le nombre de fibres non éclairées par la source ponctuelle car seuls les angles de l'hexagone ne sont pas éclairés. Ainsi, lorsque le faisceau présente une forme hexagonale, une tolérance de désalignement du spot lumineux émis par la source est admise entre le cercle inscrit et le cercle circonscris à l'hexagone.
En effet, la section du spot lumineux émis par la source a une incidence directe sur le rendement de la transmission de lumière dans les fibres mais également sur l'homogénéité de la lumière émise par la nappe textile.

Plus précisément, lorsque la section du spot est inférieure à la section du cercle inscrit dans l'hexagone et lorsque celui-ci est aligné correctement, toute l'énergie lumineuse est transmise aux fibres optiques mais certaines d'entre elles ne sont pas éclairés par le spot. Le rendement de la transmission de lumière est alors maximum, mais des lignes noires correspondant à des fibres non éclairées apparaissent sur la nappe.

Inversement, lorsque la section du spot lumineux est supérieure à la section du cercle circonscrit à l'hexagone avec un bon alignement, toutes les fibres optiques sont éclairées. Cependant, une partie de la lumière émise par la source n'est pas transmise aux fibres optiques, et le rendement de transmission est alors moindre.

La forme hexagonale des bagues de regroupement éclairées par un spot lumineux dont la section est comprise entre le cercle inscrit et le cercle circonscrit permet ainsi de garantir le meilleur équilibre entre un rendement maximum et une homogénéité de la lumière émise.

Selon différents modes de réalisation particuliers dans lesquels les bagues de regroupement maintiennent les fibres optiques par un sertissage de forme hexagonal, la source lumineuse du panneau de communication peut notamment ne pas comporter de systèmes optiques convergents agencés en regard de chaque source ponctuelle. De même, dans certains cas, les systèmes optiques peuvent être simplement agencés en regard des bagues de regroupement serties selon une forme hexagonale sans être obligatoirement en liaison rotule avec l'un des organes qui les maintiennent en position.

Selon d'autres modes de réalisation, les fibres peuvent également être collées ou soudées entre-elles pour éviter leur déplacement une fois introduites dans la bague de regroupement.

Une fois les fibres immobilisées à l'intérieur de la bague, on peut procéder alors au polissage de l'extrémité du faisceau de façon à améliorer la transmission de la lumière à l'intérieur des fibres et réduire la réflexion des rayons incidents sur cette surface.

De telles bagues de sertissage sont donc réalisées dans un métal tendre et notamment dans un alliage à base de cuivre ou d'aluminium. Elles peuvent présenter une forme évasée ou tulipée au niveau de l'extrémité d'introduction des fibres de manière à éviter de les endommager au contact d'une arrête tranchante.

En pratique, les sources ponctuelles peuvent être agencées de part et d'autre de la nappe de façon à éclairer l'ensemble des fibres optiques par leurs deux extrémités.

De cette manière, la nappe comporte des fibres optiques présentant une extrémité libre de chaque coté de la nappe. Ce mode de réalisation permet en outre d'augmenter l'intensité de l'éclairage, ce qui peut se révéler important pour rétroéclairer un panneau de très grandes dimensions.

Par ailleurs, la pluralité de sources ponctuelles peut être agencée latéralement par rapport à la nappe de fibres optiques selon diverses variantes.

Selon une première variante, les sources ponctuelles peuvent être agencées sur un support mécanique. Sa forme suit alors la bordure de la nappe. En pratique, un tel support mécanique est généralement rectiligne pour permettre la réalisation de panneaux plans et tendus, mais pour certaines applications, il peut présenter une courbure particulière et permettre de conférer à la nappe une surface gauche.

Avantageusement, un panneau de communication peut comporter un rail dans lequel est ménagée une pluralité de logements aptes à positionner les bagues de regroupement au regard d'une source ponctuelle.

Autrement dit, les bagues de regroupement sont introduites dans un logement, puis immobilisées de façon à rester constamment en regard d'une source ponctuelle. Par suite, le rail dans lequel sont ménagés les logements, suit la courbure du profilé sur lequel sont agencées les sources ponctuelles. Ainsi, les rails sont avantageusement solidarisés avec le profilé qui se trouve en regard.

Selon cette première variante, les supports mécaniques peuvent être solidarisés entre eux à leurs extrémités, et peuvent former un cadre.

Autrement dit, les supports mécaniques recevant les sources lumineuses peuvent servir de support pour la nappe, et permettre le maintien en position de cette nappe sur la face arrière du message publicitaire. Le cadre ainsi formé peut alors coopérer avec des moyens de solidarisation du panneau de communication.

Selon un mode de réalisation particulier, le panneau de communication peut comporter une structure duplicable de plusieurs cadres juxtaposés.

En d'autres termes, un panneau de communication peut comporter une pluralité de cadres formée par des supports mécaniques sur lesquels sont agencées les sources ponctuelles. De cette manière, il est possible de sectionner l'éclairage d'un message publicitaire en plusieurs tronçons, au moyen de nappes de fibres optiques différentes. Les différents tronçons peuvent notamment être sensiblement identiques, de façon à permettre une grande modularité et une adaptabilité en fonction de la dimension des messages publicitaires à éclairer. Un tel agencement permet également de faciliter le transport d'un tel panneau puisqu'il est alors démontable en plusieurs tronçons.

En pratique, un même support mécanique peut appartenir à deux cadres juxtaposés, c'est-à-dire qu'un même support mécanique peut permettre de maintenir en position plusieurs nappes successives. Dans ce cas, les bagues de regroupement par faisceaux des deux nappes juxtaposées sont agencées dans des logements qui peuvent être situés sur un même rail, dans le cas où les sources ponctuelles sont localisées au niveau d'un seul côté du support mécanique. Cependant, dans le cas où les sources ponctuelles sont agencées des deux côtés du support mécanique, ce dernier peut être positionné entre deux rails aptes à recevoir les bagues de regroupement de chaque nappe indépendamment.

Selon un mode de réalisation particulier, les supports mécaniques peuvent comporter des ailettes aptes à dissiper l'énergie calorifique dégagée par les sources ponctuelles.

En effet, les ailettes permettent d'augmenter la surface d'échange des supports mécaniques avec l'air environnant et ainsi améliorer l'évacuation de la chaleur générée par les sources ponctuelles.

Ainsi, le support mécanique peut se présenter sous la forme d'un profilé jouant à la fois le rôle de montant rigide apte à former le coté d'un cadre et d'un support dissipateur de l'énergie calorifique dégagée par les sources ponctuelles. Un tel profilé peut avantageusement être réalisé en alliage d'aluminium:

Selon une seconde variante, les sources peuvent être reliées uniquement et directement aux bagues. Dans ce cas, les sources sont alors simplement reliées entre elles au moyen d'un fil électrique et sont assemblées de manière à former une guirlande de plusieurs sources ponctuelles.

Des moyens annexes permettent alors de tendre la nappe, ou plus généralement de la maintenir dans une position déterminée par rapport au message d'information à éclairer.

Le positionnement des sources ponctuelles peut être réalisé selon diverses variantes.

Ainsi, selon une première variante, les sources ponctuelles peuvent être agencées chacune en regard de l'extrémité libre d'un faisceau de fibres déterminées. De cette manière, l'intensité lumineuse générée par une source ponctuelle, est totalement transmise au travers d'un faisceau déterminé. Cet agencement est réalisé en alignant l'axe de symétrie d'une bague de regroupement avec l'axe optique d'une source ponctuelle.

Selon une deuxième variante, les sources ponctuelles peuvent être agencées chacune en regard de plusieurs extrémités libres de faisceaux de fibres. Autrement dit, les faisceaux peuvent être regroupés latéralement au niveau de la bordure de la nappe et une source ponctuelle peut éclairer plusieurs extrémités libres de faisceaux. De cette manière, il est possible d'utiliser un nombre de sources qui est inférieur au nombre de faisceaux de fibres présents sur une même bordure de la nappe.

En pratique, le panneau de communication peut comporter une unité de commande apte à commander la mise sous tension et l'intensité d'éclairage des sources ponctuelles.

De cette manière, il est possible d'adapter ou de faire varier l'éclairage du panneau en fonction de plusieurs paramètres. Il est notamment possible d'éclairer progressivement un message publicitaire, voire de le faire clignoter pour certaines applications et notamment celle des enseignes lumineuses, voire de faire varier la chromaticité de la source lumineuse.

L'intensité d'éclairage peut également être pilotée en fonction de la luminosité extérieure ou du message publicitaire, lorsque celui-ci est remplacé, ce qui est fait périodiquement sur les panneaux d'affichage classiques, et constamment sur les panneaux d'affichage dits déroulants.

Selon un mode de réalisation particulier, l'alimentation des sources ponctuelles peut être régulée en courant et/ou en tension, selon le type de composant utilisé. De cette manière, on évite les problèmes de suralimentation et l'on protège les sources de tout risque de claquage.

En effet, les sources peuvent être de plusieurs types et notamment certaines peuvent présenter une certaine fragilité vis à vis des suralimentations. On peut notamment citer les sources ponctuelles de type diode électroluminescente blanche ou tri-couleurs, mais également les diodes électroluminescentes de type "organique", également appelées O-LED ou encore les diodes lasers.

### Description sommaire des figures

La manière de réaliser l'invention, ainsi que les avantages qui en découlent ressortiront bien de la description du mode de réalisation qui suit, donné à titre indicatif non limitatif, à l'appui des figures annexées, dans lesquelles :
- la figure 1 est une vue en perspective partielle d'un panneau de communication, conformément à l'invention,
- la figure 2 est une vue de face de la source lumineuse, conformément à l'invention,
- la figure 3 est une vue en coupe transversale selon une première variante de la source lumineuse,
- la figure 4 est une vue en perspective éclatée selon une seconde variante de la source lumineuse,
- la figure 5 est une vue en perspective de dessous d'un type de support de centrage pour système optique convergent,
- la figure 6 est une vue en perspective d'une troisième variante de la source lumineuse, conformément à l'invention,
- la figure 7 est une vue de face d'une source lumineuse formée par plusieurs portions duplicables, conformément à l'invention,
- les figures 8, 9 et 10 sont des vues de dessus selon trois variantes au niveau de la jonction entre deux sources lumineuses juxtaposées.

### Manière de réaliser l'invention

Comme déjà évoqué, l'invention concerne un panneau de communication comportant une source lumineuse apte à rétro éclairer un message publicitaire agencé sur un support.

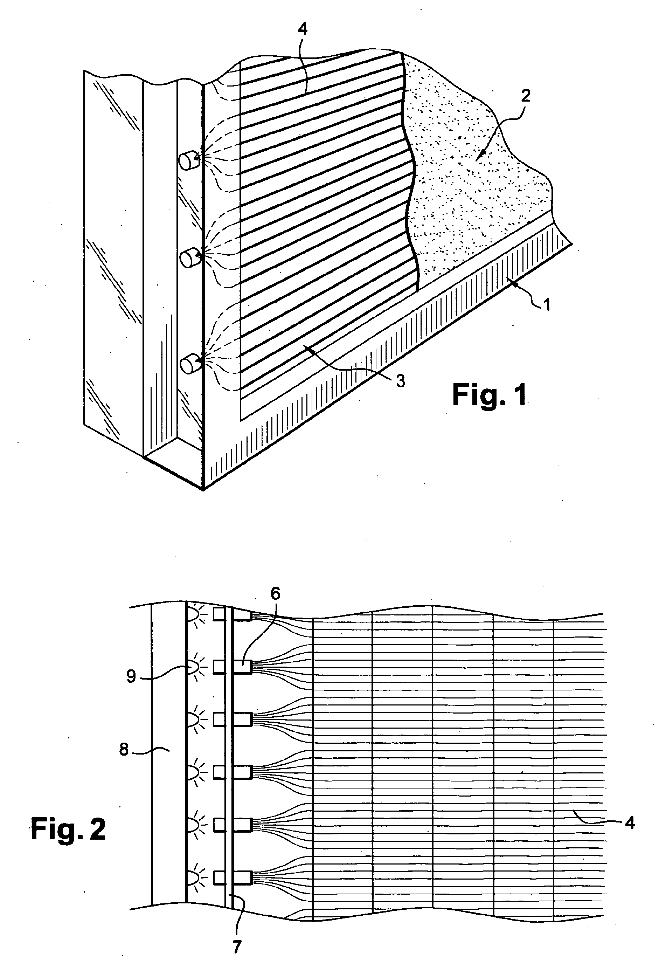

Tel que représenté à la figure 1, le panneau de communication (1) peut présenter un très faible encombrement en épaisseur. La face avant de ce panneau de communication comporte donc un support de message publicitaire (2) rétro éclairé par une source lumineuse (3).

Cette source lumineuse (3) présente une nappe (4) de fibres optiques agencée en regard de la face arrière du support (2). La nappe (4) peut notamment se présenter sous la forme d'un tissu comportant en chaîne des fils blanc de polyester de 100 deniers, la densité de tissage étant de 150 fils par pouce soit environ 60 fils par centimètres. La trame peut comporter à la fois des fils blanc de polyester de 100 deniers et des fibres optiques. Les fibres optiques comportent une âme PMMA et une gaine en polymère fluoré (PVDF). La densité des fibres optiques est d'environ 16 fibres par centimètre, leur diamètre de 500µm et leur masse linéique de 0.3g/m. Les fibres optiques sont donc tissées selon une armure satin de 16.

Tel que représenté à la figure 2, les extrémités de chacune des fibres optiques sont rassemblées au niveau d'une bague de regroupement (6) apte à maintenir dans une position déterminée chacune des fibres par rapport aux autres.

Les différentes bagues de regroupement (6) sont positionnées à l'intérieur d'un logement ménagé dans un rail (7). Ce rail (7) permet à la fois de positionner précisément les bagues de regroupement en regard d'une source lumineuse ponctuelle (9) et à la fois, de tendre la nappe (4) de manière à la rendre sensiblement plane.

De tels agencements de maintien en position peuvent également être réalisés sur les quatre bordures de la nappe (4). De cette manière, lorsque la nappe (4) est réalisée au moyen d'un procédé de tissage de plusieurs fibres optiques, celles-ci peuvent être à la fois positionnées en chaîne et en trame, de manière à éclairer la nappe (4) selon deux directions. Toutefois, en pratique, les fibres optiques peuvent être présentes que dans un seul des sens chaîne ou trame.

Tel que représenté, les sources ponctuelles (9) sont agencées sur un support mécanique (8). Un tel support (8) permet à la fois, de servir de cadre rigide apte à maintenir la nappe (4) sensiblement plane, mais également à dissiper l'énergie calorifique générée par les sources ponctuelles (9).

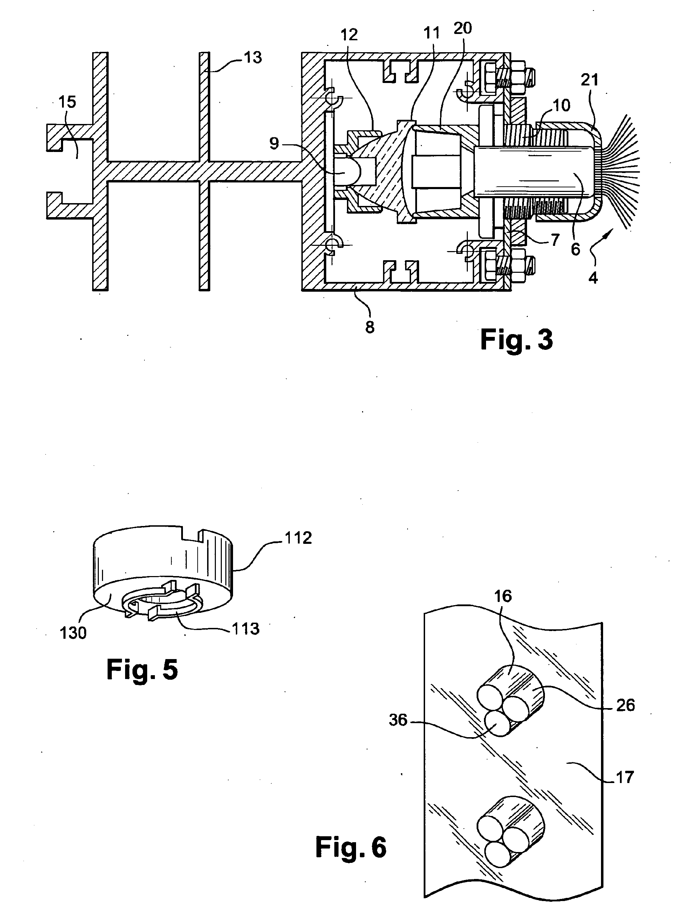

Tel que représenté à la figure 3, la source lumineuse comporte un système optique (11) de manière à concentrer le faisceau lumineux émis par la source ponctuelle (9), uniquement en direction de la bague de regroupement (6). Un tel système optique convergent (11) présente un support de centrage (12) pour permettre sa mise en place en place automatique sur l'axe optique de la source ponctuelle (9).

Par ailleurs, un organe d'alignement (20) permet également de positionner de manière automatique et avec précision la bague de regroupement (6) sur l'axe optique de la source (9). En effet, l'organe d'alignement (20) coopère avec un logement (10) rapporté sur le rail (7) et permettant de positionner une bague de regroupement (6) en regard d'une source (9). Un écrou (21) permet alors d'immobiliser la bague de regroupement (6) par rapport au rail (7).

Selon cette représentation les sources ponctuelles (9) sont agencées sur un support mécanique (8) se présentant sous la forme d'un profilé rectiligne. Un tel profilé peut notamment comporter une pluralité d'ailettes de refroidissement (13) aptes à améliorer la dispersion de l'énergie calorifique dégagée par les sources ponctuelles (9). Il peut également comporter une rainure (15) pour permettre la solidarisation des extrémités en regard de plusieurs profilés (8) et ainsi la réalisation d'un cadre rigide.

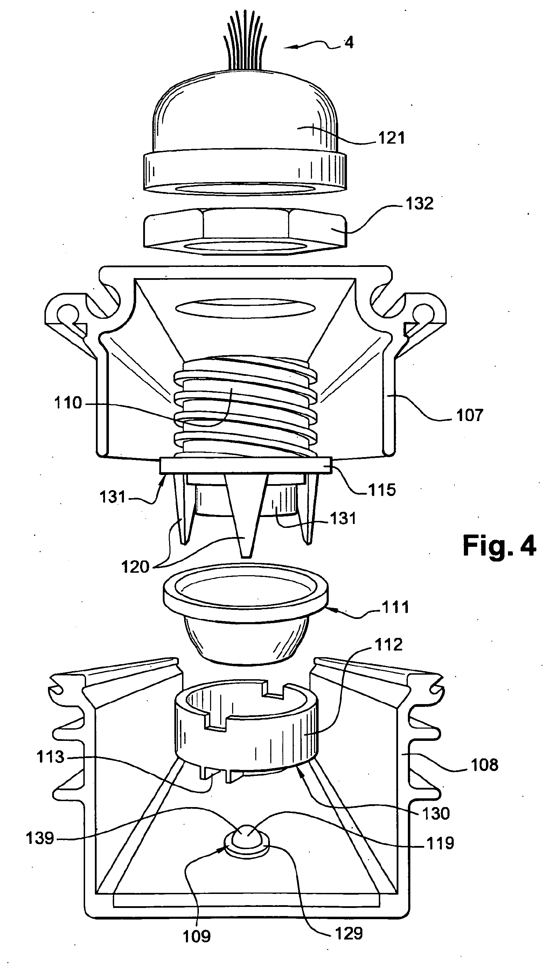

Tel que représenté la figure 4, le rail (107) peut être encliqueté sur le profilé (108) de manière à exercer une pression, par l'intermédiaire de l'organe d'alignement (120), sur le système optique convergent (111). Le système optique convergent (111) étant agencé en liaison rotule avec, d'une part le support de centrage (112), et d'autre part, l'organe d'alignement (120), la force exercée par le rail (107) permet de conserver une coaxialité entre les différents éléments.

Dans ce cas, la diode électroluminescente (109) comporte une embase (119) collée sur un circuit imprimé. Cette embase peut présenter une forme cylindrique et comporter une surface plane d'appui (129) au centre de laquelle se trouve le bulbe (139) recouvrant l'émetteur. Ainsi, la face arrière (130) du support de centrage (112) peut venir au contact de la surface d'appui (129) selon une liaison de type appui plan. Des pattes de fixations (113) permettent quant à elles d'immobiliser le support de centrage (112) sur l'embase (119).

Le système optique convergent (111) vient alors au contact d'une portion hémisphérique voire parabolique du support de centrage (112).

Par ailleurs, le logement (110) et l'organe d'alignement (120) peuvent former une pièce monolithique rapportée sur le rail (107). L'organe d'alignement (120) consiste dans ce cas en trois pointes destinées à générer trois contacts ponctuels avec une portion hémisphérique voire parabolique du système optique convergent (111) et ainsi une liaison de type rotule. Par ailleurs, les trois pointes peuvent présenter une capacité de déformation permettant de compenser les incertitudes relatives, d'une part, aux côtes de fabrication des différents éléments intercalés entre le profilé (108) et le rail (107), et d'autre part, au positionnement de la diode (109) par rapport au profilé (108).

Une collerette d'appui (131) peut comporter des méplats (115) de manière à faciliter la solidarisation du logement (110) sur le rail (107). Ainsi, un écrou (132) peut être serré sans nécessiter le blocage en rotation du logement (110) par des moyens annexes.

Tel que représenté à la figure 5, le support de centrage (112) est monté serré sur l'embase (119) au moyen des pattes de fixation (113) présentant une élasticité pour se déformer et venir épouser la forme extérieure de l'embase (119). Ainsi, les pattes de fixation (113) peuvent définir un contour cylindrique de diamètre inférieur à la forme cylindrique complémentaire de l'embase.

Tel que représenté à la figure 6, un rail (17) peut permettre d'agencer en un même point, différentes bagues de regroupement (16, 26, 36). De cette manière, une source ponctuelle peut être agencée en regard de plusieurs bagues de regroupement (16, 26, 36). Avantageusement, de manière à éviter les problèmes d'hétérogénéité de la source lumineuse, sept bagues de regroupement de forme hexagonale peuvent être agencées en regard d'une source ponctuelle. De plus, avec cette disposition hexagonale des bagues de regroupement, la lumière peut être transmise aux fibres optiques avec un rendement maximum.

Bien évidemment un système technique tel que précédemment décrit peut également être positionné entre la source ponctuelle et les différentes bagues de regroupement.

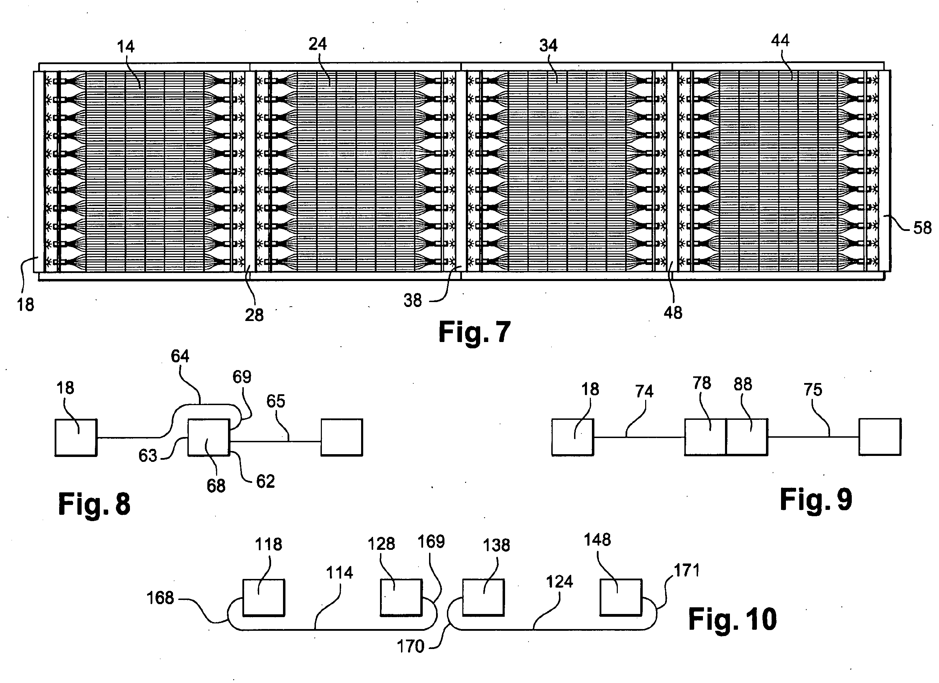

Tel que représenté à la figure 7, le panneau de communication peut comporter une surface lumineuse formée par la juxtaposition de plusieurs cadres comprenant chacun une nappe de fibres optiques (14, 24, 34, 44). Dans ce cas, les profilés (18, 58) comportent des sources lumineuses ponctuelles au niveau d'une de leurs faces. Les profilés (28, 38, 48) comportent, quant à eux, des sources lumineuses agencées de part et d'autre, sur chacune de leurs faces au regard d'une nappe.

Une telle structure est par conséquent très compacte et modulable, et permet une adaptabilité à toute dimension de panneau de communication. Les différents profilés (18, 28, 38, 48, 58) sont ensuite raccordés entre eux grâce à des éléments de solidarisation qui peuvent eux-mêmes être des profilés du même type.

Cette structure permet également de faciliter le transport du panneau qui peut être démonté en plusieurs modules destinés à être assemblés sur le site d'installation du panneau de communication.

Tel que représenté à la figure 8, il est également possible d'utiliser un profilé (68) qui comporte le double de sources ponctuelles par rapport au profilé (18). En effet, un revers (69) au niveau de la nappe de fibres optiques (64) permet de rapporter les différentes bagues de regroupement au niveau de la face (62) du profilé (68), agencé en regard de la nappe (65).

De cette manière, la face arrière (63) du profilé (68) peut présenter des agencements favorisant l'évacuation de l'énergie calorifique dégagée par les sources ponctuelles qu'il comporte. De plus, cet agencement permet d'utiliser un faible nombre de profilés et par conséquent, cette solution permet de réaliser une source lumineuse de faible masse.

Tel que représenté à la figure 9, deux nappes (74, 75) peuvent également être juxtaposées en utilisant deux profilés (78, 88), dont les faces arrières sont positionnées en regard. Cet agencement présente une rigidité importante et peut être par conséquent utilisé pour des panneaux de communication de très grande dimension.

Tel que représenté à la figure 10, les profilés (118, 128, 138, 148) peuvent être agencés au niveau de la face arrière des nappes de fibres optiques (114, 124). Cet agencement garantit une bonne homogénéité de la lumière émise par chaque nappe puisque la partie éclairante des nappes peut débuter au plus près l'une de l'autre au niveau des revers (169) et (170). Les revers (168) et (171) ne sont pas utiles en termes d'homogénéité de la source lumineuse mais ils permettent de limiter l'encombrement occupé par la structure porteuse des nappes (114, 124). De tels revers (168, 169, 170, 171) peuvent être réalisés au moyen de barres agencées parallèlement par rapport aux profilés (118, 128, 138, 148).

Par ailleurs, à cause de la courbure élevée des nappes de fibres optiques (114, 124) au niveau des revers (168, 169, 170, 171) il peut se produire une sur-intensité lumineuse néfaste à l'homogénéité de la source lumineuse. Ainsi, les lisières des nappes de fibres optiques (114, 124) peuvent comporter un traitement différent du reste de la partie centrale éclairante. Selon un mode de réalisation particulier, les lisières peuvent également ne présenter aucun traitement pour émettre latéralement la lumière.

Il ressort de ce qui précède qu'un panneau de communication, conforme à l'invention, comporte de nombreux avantages, et notamment :
- il présente un très faible encombrement en épaisseur et est très rapide à assembler,
- il présente une modularité très intéressante, de façon à permettre une adaptation à toute dimension de panneaux de communication au moyen d'un élément modulaire standard,
- il permet des effets lumineux tels que le clignotement ou une variation d'intensité si nécessaire,
- son entretien est très simple, car la durée de vie des sources ponctuelles peut être de plusieurs dizaines de milliers d'heures.

## Revendications

1. Panneau de communication (1) comportant une source lumineuse (3) apte à rétro éclairer un message publicitaire (2) ou analogue agencé sur un support, ladite source lumineuse (3) comportant :
- une nappe (4) de fibres optiques (5) agencée en regard de la face arrière du support et apte à émettre latéralement la lumière, lesdites fibres optiques (5) étant sur au moins une bordure de la nappe rassemblées en une pluralité de faisceaux, chacun desdits faisceaux étant équipé à son extrémité libre d'une bague de regroupement (6) pour maintenir chacune des fibres (5) par rapport aux autres de ce même faisceau, la bague de regroupement étant montée sur un organe d'alignement;
- une pluralité de sources ponctuelles (9) en regard d'au moins une bordure de la nappe de fibres optiques, des systèmes optiques convergents (11) étant agencés en regard de chaque source ponctuelle (9) de manière à collimater de façon homogène les rayons lumineux émis par les sources ponctuelles (9) en direction des fibres optiques (5), lesdits systèmes optiques convergeants présentant un support de centrage;
ledit panneau étant **caractérisé en ce que** lesdits systèmes optiques convergents (11) sont agencés en liaison rotule avec d'une part lesdits supports de centrage (12) et d'autre part lesdits organes d'alignement (20) des bagues de regroupement (6).

2. Panneau de communication selon la revendication 1, **caractérisé en ce que** les bagues de regroupement (6) maintiennent les fibres optiques (5) par un sertissage de forme hexagonal.

3. Panneau de communication selon la revendication 1, **caractérisé en ce que** les sources ponctuelles (9) sont agencées de part et d'autre de la nappe de façon à éclairer l'ensemble des fibres optiques par leurs deux extrémités.

4. Panneau de communication selon la revendication 1, **caractérisé en ce que** lesdites sources ponctuelles (9) sont agencées sur un support mécanique (8).

5. Panneau de communication selon la revendication 4, **caractérisé en ce que** les supports mécaniques (8) sont solidarisés entre eux à leurs extrémités et forment un cadre.

6. Panneau de communication selon la revendication 5, **caractérisé en ce qu'**il comporte une structure duplicable de plusieurs cadres juxtaposés (14, 24, 34, 44).

7. Panneau de communication selon la revendication 6, **caractérisé en ce qu'**en un même support mécanique (18, 28, 38, 48, 58) appartient à deux cadres juxtaposés.

8. Panneau de communication selon la revendication 1, **caractérisé en ce que** les supports mécaniques (8) comportent des ailettes (13) aptes à dissiper l'énergie calorifique dégagée par les sources ponctuelles (9).

9. Panneau de communication selon la revendication 1, **caractérisé en ce que** lesdites sources ponctuelles (9) sont agencées chacune en regard de l'extrémité libre d'un faisceau de fibres déterminé.

10. Panneau de communication selon la revendication 1, **caractérisé en ce que** lesdites sources ponctuelles (9) sont agencées chacune en regard de plusieurs extrémités libres de faisceaux de fibres.

11. Panneau de communication selon la revendication 1, **caractérisé en ce qu'**il comporte une unité de commande apte à commander la mise sous tension et l'intensité d'éclairage des sources ponctuelles.

## Claims

1. Communication display (1) comprising a light source (3) suitable for backlighting an advertising spot (2) or similar, arranged on a support, the said light source (3) comprising:
- a web (4) of optical fibres (5) arranged facing the back of the support and suitable for emitting the light laterally, the said optical fibres (5) being present on at least one edge of the web assembled in a plurality of bundles, each of the said bundles being equipped at its free end with an assembling ring (6) for securing each of the fibres (5) with regard to the others of the same bundle, the assembling ring being mounted on an aligning member ;
- a plurality of point sources (9) facing at least one edge of the web of optical fibres, convergent optical systems (11) being arranged facing each point source (9) for uniformly collimating the light rays emitted by the point sources (9) towards the optical fibres (5), the said convergent optical systems comprising a centering support ;
the said display being **characterized in that** the said convergent optical systems (11) are arranged in a ball joint connection with, on the one hand, the said centering supports (12) and, on the other, the said members (20) for aligning the assembling rings (6).

2. Communication display according to Claim 1, **characterized in that** the assembling rings (6) secure the optical fibres (5) by a hexagonal crimping.

3. Communication display according to Claim 1, **characterized in that** the point sources (9) are arranged on either side of the web in order to light all the optical fibres via their two ends.

4. Communication display according to Claim 1, **characterized in that** the said point sources (9) are arranged on a mechanical support (8).

5. Communication display according to Claim 4, **characterized in that** the mechanical supports (8) are joined together at their ends and form a frame.

6. Communication display according to Claim 5, **characterized in that** it comprises a duplicable structure of a plurality of juxtaposed frames (14, 24, 34, 44).

7. Communication display according to Claim 6, **characterized in that** the same mechanical support (18, 28, 38, 48, 58) belongs to two juxtaposed frames.

8. Communication display according to Claim 1, **characterized in that** the mechanical supports (8) comprise fins (13) for dissipating the heat generated by the light sources (9).

9. Communication display according to Claim 1, **characterized in that** the said point sources (9) are each arranged facing the free end of a predefined bundle of fibres.

10. Communication display according to Claim 1, **characterized in that** the said point sources (9) are each arranged facing a plurality of free ends of fibre bundles.

11. Communication display according to Claim 1, **characterized in that** it comprises a control unit for controlling the energization and the lighting intensity of the point sources.

## Patentansprüche

1. Anzeigetafel (1) mit einer Lichtquelle (3), die sich dazu eignet, einen Werbespot (2) o. dgl. zu hinterleuchten, der auf einem Träger angebracht ist, wobei die Lichtquelle (3) umfasst:
- ein Feld (4) aus Llchtwellenleltern (5), das gegenüber der Rückseite des Trägers angebracht und dazu geeignet ist, das Licht seitlich abzugeben, wobei die Lichtwellenleiter (5) an zumindest einem Rand des Feldes zu mehreren Bündeln zusammengefasst sind, wobei jedes der Bündel an seinem freien Ende mit einem Sammelring (6) ausgestattet ist, um jeden der Leiter (5) in Bezug auf die anderen Leiter desselben Bündels zu halten, wobei der Sammelring an einem Ausrichtungselement angebracht ist;
- mehrere Punktlichtquellen (9), die zumindest einem Rand des Feldes aus Lichtwellenleitern gegenüberliegen, wobei optische Konvergenzsysteme (11) jeder Punktlichtquelle (9) so gegenüberliegend angebracht sind, dass die Lichtstrahlen, die von den Punktlichtquellen (9) abgegeben werden, in Richtung auf die Lichtwellenleiter (5) homogen gerichtet werden, wobei die optischen Konvergenzsysteme eine Zentrierhalterung aufweisen;
wobei die Tafel **dadurch gekennzeichnet ist, dass** die optischen Konvergenzsysteme (11) einerseits mit den Zentrierhalterungen (12) und andererseits mit den Ausrichtungselementen (20) der Sammelringe (6) in Kugelgelenkverbindung stehen.

2. Anzeigetafel nach Anspruch 1, **dadurch gekennzeichnet, dass** die Sammelringe (6) die Lichtwellenleiter (5) mittels einer hexagonal geformten Crimpverbindung halten.

3. Anzeigetafel nach Anspruch 1, **dadurch gekennzeichnet, dass** die Punktlichtquellen (9) auf beiden Seiten des Feldes so angebracht sind, dass alle Lichtwellenleiter von ihren beiden Enden her angestrahlt werden.

4. Anzeigetafel nach Anspruch 1, **dadurch gekennzeichnet, dass** die Punktlichtquellen (9) an einer mechanischen Halterung (8) angebracht sind.

5. Anzeigetafel nach Anspruch 4, **dadurch gekennzeichnet, dass** die mechanischen Halterungen (8) untereinander an ihren Enden fest miteinander verbunden sind und einen Rahmen bilden.

6. Anzeigetafel nach Anspruch 5, **dadurch gekennzeichnet, dass** sie einen duplizierbaren Aufbau aus mehreren nebeneinander liegenden Rahmen (14, 24, 34, 44) umfasst.

7. Anzeigetafel nach Anspruch 6, **dadurch gekennzeichnet, dass** eine und dieselbe mechanische Halterung (18, 28, 38, 48, 58) zu zwei nebeneinander liegenden Rahmen gehört.

8. Anzeigetafel nach Anspruch 1, **dadurch gekennzeichnet, dass** die mechanischen Halterungen (8) Rippen (13) umfassen, die sich dazu eignen, die von den Punktlichtquellen (9) freigesetzte Wärmeenergie abzuleiten.

9. Anzeigetafel nach Anspruch 1, **dadurch gekennzeichnet, dass** die Punktlichtquellen (9) jeweils dem freien Ende eines bestimmten Lichtwellenleiterbündels gegenüberliegend angebracht sind.

10. Anzeigetafel nach Anspruch 1, **dadurch gekennzeichnet, dass** die Punktlichtquellen (9) jeweils mehreren freien Enden von Lichtwellenleiterbündeln gegenüberliegend angebracht sind.

11. Anzeigetafel nach Anspruch 1, **dadurch gekennzeichnet, dass** sie eine Steuereinheit umfasst, die sich dazu eignet, die Spannungsversorgung und Beleuchtungsstärke der Punktlichtquellen zu steuern.
